# EUROPEAN PATENT APPLICATION

(11) **EP 4 796 593 A1**
(43) Date of publication of application: **26.08.2026**
(21) Application number: 24879692.2
(22) Date of filing: 15.10.2024
(51) Int. Cl.: C08L 67/00, C08K 3/013, C08K 3/26, C08K 7/14

(54) **THERMOPLASTIC POLYESTER RESIN COMPOSITION, MOLDED ARTICLE OF SAME, AND HEAT DISSIPATION MEMBER**

(30) Priority: 19.10.2023 JP 2023180136
(71) Applicant: Toray Industries, Inc., Tokyo 103-8666 (JP)
(72) Inventor: TOJO Yusuke, Nagoya-shi, Aichi 455-8502 (JP); MIYAMOTO Kohei, Nagoya-shi, Aichi 455-8502 (JP); UMETSU Hideyuki, Nagoya-shi, Aichi 455-8502 (JP)
(74) Representative: Mewburn Ellis LLP
(86) International application number: PCT/JP2024/036611
(87) International publication number: WO 2025/084268

(57) **Abstract**

An object of the present invention is to provide a thermoplastic polyester resin composition having excellent heat dissipation characteristics and heat cycle property, and a molded article thereof. The present invention proposes a thermoplastic polyester resin composition comprising at least a thermoplastic polyester resin (Component (A)), magnesium carbonate (Component (B)), and glass fiber (Component (C)) having a magnesium atom content of 6 to 15% by mass as determined using a scanning electron microscope (SEM) equipped with an energy dispersive X-ray spectroscopy (EDX), wherein the content of Component (B) is 50 to 150 parts by weight relative to 100 parts by weight of Component (A), and the content of Component (C) is 5 to 100 parts by weight relative to 100 parts by weight of Component (A).

## Description

### TECHNICAL FIELD

The present invention relates to a thermoplastic polyester resin composition, and a molded article and a heat dissipation material formed by molding the same.

### BACKGROUND ART

Thermoplastic polyester resins are utilized in a wide range of fields such as mechanical parts, electrical and electronic parts, and automobile parts by taking advantage of various characteristics such as their excellent injection molding properties and mechanical properties.

In recent years, electrical and electronic parts mounted in electric vehicles and the like have increased in heat generation during use due to miniaturization and higher output, and resin compositions applied to these uses are required to have high heat dissipation characteristics. Examples using boron nitride, graphite, or the like as a filler from which a heat dissipation effect is expected in order to improve the heat dissipation characteristics of a resin composition are cited (for example, Patent Documents 1 and 2). However, since the use of these fillers causes problems such as wear of processing equipment and reduction in insulation of materials, resin compositions to which magnesium carbonate is applied as a filler other than these have been disclosed (for example, Patent Documents 3 to 5).

### PRIOR ART DOCUMENTS

### PATENT DOCUMENTS

Patent Document 1: JP 2012-229315 A
Patent Document 2: JP 2014-152297 A
Patent Document 3: WO 13/125495
Patent Document 4: JP 2009-91440 A
Patent Document 5: JP 2005-272752 A

### SUMMARY OF INVENTION

### PROBLEM WHICH THE INVENTION TRIES TO SOLVE

However, when applying magnesium carbonate to a thermoplastic polyester resin, it is necessary to contain a large amount of magnesium carbonate for manifesting excellent heat dissipation characteristics. In the inventions disclosed in Patent Documents 3 to 5, there was a problem that as the content of magnesium carbonate increased, the heat cycle property of the resulting thermoplastic polyester resin composition decreased due to breakage of glass fibers used as a reinforcing material. As a result of the decrease in the heat cycle property, cracking of the molded article may occur during use.

An object of the present invention is to provide a thermoplastic polyester resin composition having excellent heat dissipation characteristics and heat cycle property, and a molded article thereof, by using magnesium carbonate as a heat dissipation filler and using glass fibers of a specific composition as a reinforcing material.

### MEANS FOR SOLVING THE PROBLEM

As a result of repeated studies to solve the above problems, the present inventors have found that the above problems can be solved by containing 50 to 150 parts by weight of magnesium carbonate and 5 to 100 parts by weight of glass fibers having a magnesium atom (hereinafter sometimes described as "Mg") content of 6 to 15% by mass, as determined using a scanning electron microscope (SEM) equipped with an energy dispersive X-ray spectroscopy (EDX), based on 100 parts by weight of the thermoplastic polyester resin, and have reached the present invention.

That is, the present invention has the following constitution:
[1] A thermoplastic polyester resin composition comprising a thermoplastic polyester resin (hereinafter referred to as "Component (A)"), magnesium carbonate (hereinafter referred to as "Component (B)"), and glass fiber (hereinafter referred to as "Component (C)") having a magnesium atom content of 6 to 15% by mass as determined using a scanning electron microscope (SEM) equipped with an energy dispersive X-ray spectroscopy (EDX), wherein:
   the content of Component (B) is 50 to 150 parts by weight relative to 100 parts by weight of Component (A); and
   the content of Component (C) is 5 to 100 parts by weight relative to 100 parts by weight of Component (A).
[2] The thermoplastic polyester resin composition according to [1], further comprising a hydroxyl group-containing compound (hereinafter referred to as "Component (D)"), wherein the content of Component (D) is 0.3 to 15 parts by weight relative to 100 parts by weight of Component (A).
[3] The thermoplastic polyester resin composition according to [1] or [2], wherein Component (C) has a tensile modulus of 75 to 100 GPa.
[4] The thermoplastic polyester resin composition according to any one of [1] to [3], wherein Component (B) contains iron atoms (Fe) in an iron atom content of 0.20% by mass or more and 1.50% by mass or less as determined using a scanning electron microscope (SEM) equipped with an energy dispersive X-ray spectroscopy (EDX).
[5] A molded article obtained by injection molding the thermoplastic polyester resin composition according to any one of [1] to [4].
[6] A heat dissipation material comprising the thermoplastic polyester resin composition according to any one of [1] to [4].

### EFFECTS OF INVENTION

Since the thermoplastic polyester resin composition of the present invention suppresses the breakage of glass fibers even while containing a large amount of magnesium carbonate, it is possible to obtain a molded article having excellent heat dissipation characteristics and heat cycle property.

### MODE FOR CARRYING OUT THE INVENTION

Next, the thermoplastic polyester resin composition of the present invention will be described in detail with reference to examples. However, the present invention is not to be construed as being limited to the examples given below.

The thermoplastic polyester resin composition of the present invention is a thermoplastic polyester resin composition comprising a thermoplastic polyester resin (hereinafter, sometimes referred to as "Component (A)"), magnesium carbonate (hereinafter, sometimes referred to as "Component (B)"), and glass fibers (hereinafter, sometimes referred to as "Component (C)") having a magnesium atom content of 6 to 15% by mass as determined using a scanning electron microscope (SEM) equipped with energy dispersive X-ray spectroscopy (EDX), wherein the content of Component (B) is 50 to 150 parts by weight based on 100 parts by weight of Component (A), and the content of Component (C) is 5 to 100 parts by weight based on 100 parts by weight of Component (A).

A thermoplastic polyester resin can improve heat dissipation characteristics by containing magnesium carbonate; however, for that purpose, it is necessary to contain a large amount of magnesium carbonate in the resin composition. Magnesium carbonate contained in a large amount in the resin composition affects the breakage or the like of glass fibers and deteriorates the heat cycle property of the resulting molded article. In the present invention, 50 to 150 parts by weight of Component (B) and 5 to 100 parts by weight of Component (C) are contained based on 100 parts by weight of Component (A). Thereby, even when Component (B) is contained in a large amount in the resin composition, breakage of Component (C) is suppressed, and thus high heat cycle property can be manifested. In addition, since the presence of glass fibers that are difficult to break contributes to the formation of a heat conduction path (heat conduction path) in the molded article, even higher heat dissipation characteristics are manifested.

Examples of the thermoplastic polyester resin (Component (A)) used in the present invention include (1) a polycondensation product of a dicarboxylic acid or an ester-forming derivative thereof and a diol or an ester-forming derivative thereof, (2) a polycondensation product of a hydroxycarboxylic acid or an ester-forming derivative thereof, and (3) a ring-opening polymerization product of a lactone. Component (A) may be a homopolymer or a copolymer. Further, as long as the object of the present invention is not impaired, it may be one in which structural units of other polymers other than polyester are copolymerized. In this case, the amount of structural units of other polymers other than polyester is less than 50 mol%, preferably less than 20 mol%, and most preferably less than 5 mol%, when all repeating units of Component (A) are taken as 100 mol%. Among the embodiments (1) to (3) above, it is preferable that Component (A) be in the embodiment (1), that is, one obtained by polycondensation of a dicarboxylic acid or an ester-forming derivative thereof and a diol or an ester-forming derivative thereof, from the viewpoint of being superior in mechanical properties and heat resistance.

Examples of the dicarboxylic acid or the ester-forming derivative thereof include aromatic dicarboxylic acids such as terephthalic acid, isophthalic acid, phthalic acid, 2,6-naphthalenedicarboxylic acid, 1,5-naphthalenedicarboxylic acid, bis(p-carboxyphenyl)methane, anthracenedicarboxylic acid, 4,4'-diphenylether dicarboxylic acid, 5-tetrabutylphosphonium isophthalic acid, and 5-sodium sulfoisophthalic acid; aliphatic dicarboxylic acids such as oxalic acid, succinic acid, adipic acid, sebacic acid, azelaic acid, dodecanedioic acid, malonic acid, glutaric acid, and dimer acid; alicyclic dicarboxylic acids such as 1,3-cyclohexanedicarboxylic acid and 1,4-cyclohexanedicarboxylic acid; and ester-forming derivatives thereof. Two or more of these may be used.

Also, examples of the diol or the ester-forming derivative thereof include aliphatic or alicyclic glycols having 2 to 20 carbon atoms, such as ethylene glycol, propylene glycol, 1,4-butanediol, neopentyl glycol, 1,5-pentanediol, 1,6-hexanediol, decamethylene glycol, cyclohexanedimethanol, cyclohexanediol, and dimer diol; long-chain glycols having a molecular weight of 200 to 100,000, such as polyethylene glycol, poly-1,3-propylene glycol, and polytetramethylene glycol; aromatic dioxy compounds such as 4,4'-dihydroxybiphenyl, hydroquinone, t-butylhydroquinone, bisphenol A, bisphenol S, and bisphenol F; and ester-forming derivatives thereof. Two or more of these may be used.

Examples of the polymer or copolymer having the dicarboxylic acid or the ester-forming derivative thereof and the diol or the ester-forming derivative thereof as structural units include aromatic polyester resins such as: polyethylene terephthalate, polypropylene terephthalate, polybutylene terephthalate, polypropylene isophthalate, polybutylene isophthalate, polybutylene naphthalate, polypropylene isophthalate/terephthalate, polybutylene isophthalate/terephthalate, polypropylene terephthalate/naphthalate, polybutylene terephthalate/naphthalate, polybutylene terephthalate/decanedicarboxylate, polypropylene terephthalate/5-sodium sulfoisophthalate, polybutylene terephthalate/5-sodium sulfoisophthalate, polypropylene terephthalate/polyethylene glycol, polybutylene terephthalate/polyethylene glycol, polypropylene terephthalate/polytetramethylene glycol, polybutylene terephthalate/polytetramethylene glycol, polypropylene terephthalate/isophthalate/polytetramethylene glycol, polybutylene terephthalate/isophthalate/polytetramethylene glycol, polybutylene terephthalate/succinate, polypropylene terephthalate/adipate, polybutylene terephthalate/adipate, polypropylene terephthalate/sebacate, polybutylene terephthalate/sebacate, polypropylene terephthalate/isophthalate/adipate, polybutylene terephthalate/isophthalate/succinate, polybutylene terephthalate/isophthalate/adipate, and polybutylene terephthalate/isophthalate/sebacate. These polymers and copolymers may be used alone or in combination of two or more. Here, "/" represents a copolymer (the same shall apply hereinafter).

Among these, from the viewpoint of further improving mechanical properties and heat resistance, a polymer or a copolymer having a residue of an aromatic dicarboxylic acid or an ester-forming derivative thereof and a residue of an aliphatic diol or an ester-forming derivative thereof as main structural units is more preferable, and a polymer or a copolymer of terephthalic acid, naphthalenedicarboxylic acid or an ester-forming derivative thereof and an aliphatic diol selected from ethylene glycol, propylene glycol, and 1,4-butanediol or an ester-forming derivative thereof is further preferable.

As Component (A), among those described above, aromatic polyester resins such as polyethylene terephthalate, polypropylene terephthalate, polybutylene terephthalate, polypropylene naphthalate, polybutylene naphthalate, polypropylene isophthalate/terephthalate, polybutylene isophthalate/terephthalate, polypropylene terephthalate/naphthalate, and polybutylene terephthalate/naphthalate are particularly preferable, it is more preferable to use polyethylene terephthalate, polypropylene terephthalate, and polybutylene naphthalate, and polybutylene terephthalate is further preferable from the viewpoint of being excellent in moldability and crystallinity. Also, two or more of these may be mixed in an arbitrary ratio and used.

The ratio of terephthalic acid or an ester-forming derivative thereof based on the total dicarboxylic acids constituting the polymer or copolymer of the dicarboxylic acid or the ester-forming derivative thereof and the diol or the ester-forming derivative thereof is preferably 30 mol% or more, and more preferably 40 mol% or more.

In the present invention, a liquid crystal polyester resin which manifests anisotropy when melted can be used as Component (A). Examples of the structural units of the liquid crystal polyester resin include an aromatic oxycarbonyl unit, an aromatic dioxy unit, an aromatic and/or aliphatic dicarbonyl unit, an alkylene dioxy unit, and an aromatic iminooxy unit.

The carboxylic acid group amount of Component (A) is preferably 50 eq/t or less from the viewpoint of flowability, hydrolysis resistance, and heat resistance. From the viewpoint of hydrolysis resistance, it is more preferably 40 eq/t or less, and further preferably 30 eq/t or less. The lower limit of the carboxylic acid group amount is approximately 0 eq/t. Here, the carboxylic acid group amount of Component (A) can be determined by dissolving Component (A) in an o-cresol/chloroform solvent and then performing titration with ethanolic potassium hydroxide.

Component (A) preferably has a weight average molecular weight (Mw) of 8,000 or more from the viewpoint of improving mechanical strength. Further, in terms of improving flowability, the weight average molecular weight (Mw) is preferably 500,000 or less,
more preferably 300,000 or less, and further preferably 250,000 or less. The weight average molecular weight (Mw) of Component (A) is determined as a polymethyl methacrylate (PMMA) equivalent value measured by gel permeation chromatography (GPC) using hexafluoroisopropanol as a solvent.

Component (A) preferably has an intrinsic viscosity (IV) of 0.60 dL/g or more from the viewpoint of further improving mechanical properties. The intrinsic viscosity is more preferably 0.65 dL/g or more, and further preferably 0.70 dL/g or more. Further, an intrinsic viscosity of 2.00 dL/g or less is preferable because flowability can be improved. The intrinsic viscosity is more preferably 1.70 dL/g or less, and further preferably 1.40 dL/g or less. The intrinsic viscosity of Component (A) is determined by measurement at 25°C using o-chlorophenol as a solvent.

Component (A) can be produced by a known polycondensation method, ring-opening polymerization, or the like. The production method may be either batch polymerization or continuous polymerization, and either transesterification reaction or reaction by direct polymerization can be applied. However, from the viewpoint of productivity, continuous polymerization is preferable, and direct polymerization is more preferably used. In order to effectively advance the esterification reaction or transesterification reaction and the polycondensation reaction, it is preferable to add a polymerization reaction catalyst during these reactions.

The thermoplastic polyester resin composition of the present invention contains magnesium carbonate (Component (B)) in order to improve the heat dissipation characteristics of the resulting molded article while having excellent heat cycle property.

Component (B) includes magnesium carbonate anhydrous salt represented by the chemical formula MgCO₃ containing no crystal water, and basic magnesium carbonate represented by the chemical formula xMgCO₃ · Mg(OH)₂ · yH₂O (where x is a ratio of 3 to 5 and y is a ratio of 3 to 7 relative to Mg(OH)₂).

Magnesium carbonate, which is Component (B), may be a pulverized product of magnesite, which is a natural ore, or a synthetic product using seawater or the like as a raw material. Further, Component (B) may contain other metal atoms other than magnesium, such as calcium, iron, and aluminum, originating from raw materials or production processes, as long as the object of the present invention is not impaired. Among others, Component (B) preferably contains 0.20% by mass or more of iron atoms (Fe) determined using a scanning electron microscope (SEM) equipped with energy dispersive X-ray spectroscopy (EDX) described later. By using such Component (B), there is an advantage that laser marking ability, which is the printability by laser on the surface of a molded article, is more excellent. The method for measuring iron atoms using a scanning electron microscope (SEM) equipped with energy dispersive X-ray spectroscopy (EDX) (hereinafter sometimes referred to as "Measurement Method A") is as described later. The content of iron atoms determined by Measurement Method A is more preferably 0.30% by mass or more, and particularly preferably 0.40% by mass or more. On the other hand, when the content of iron atoms determined by Measurement Method A is 1.50% by mass or less, it is preferable in that the thermal conductivity of the thermoplastic polyester resin composition according to the present invention can be further improved. The content of iron atoms determined by Measurement Method A is more preferably 1.20% by mass or less, and particularly preferably 1.00% by mass or less.

### <Measurement Method A>

The content of iron atoms in Component (B) is determined by the following method. That is, it can be determined using JSM-IT700HR manufactured by JEOL Ltd., which is a scanning electron microscope (SEM) equipped with energy dispersive X-ray spectroscopy (EDX). Specifically, magnesium carbonate particles are placed on an observation sample stage attached to a conductive carbon tape, and platinum-palladium is deposited by a sputtering method to obtain a sample for an electron microscope. This sample for an electron microscope is observed by SEM, and the magnification of the observation field is adjusted so that 30 or more and 50 or less magnesium carbonate particles exist in the observation field. Thirty magnesium carbonate particles existing in the observation field are selected, and elemental analysis is performed by energy dispersive X-ray spectroscopy for each at an accelerating voltage condition of 15 kV to detect atoms (carbon, oxygen, sodium, magnesium, aluminum, silicon, potassium, calcium, iron, copper) contained in the magnesium carbonate particles. The content of iron atoms is calculated by taking the total mass of the detected atoms as 100% by mass. Note that atoms other than the atoms used for calculation (carbon, oxygen, sodium, magnesium, aluminum, silicon, potassium, calcium, iron, copper) shall not be included in the total mass of atoms. The content of iron atoms is determined for each of the selected 30 particles, and the arithmetic mean is taken as the content of iron atoms in Component (B). Note that the meaning of "atoms" is not influenced by its existing state, such as a state of existing in combination with other atoms or a state of existing as ions.

The dispersion diameter of Component (B) in the thermoplastic polyester resin composition is preferably in the range of 0.1 to 50.0 µm as an average particle size (secondary particle size). When this average particle size is 0.1 µm or more, it is preferable because a heat conduction path is easily formed in the resulting molded article of the thermoplastic polyester composition, and heat dissipation characteristics are improved. The average particle size of Component (B) is more preferably 1.0 µm or more, and further preferably 10.0 µm or more. On the other hand, when the average particle size of Component (B) is 50.0 µm or less, it is preferable because the mechanical strength of the resulting thermoplastic polyester resin composition is improved. The average particle size of Component (B) is more preferably 40.0 µm or less, and further preferably 30.0 µm or less. Note that the average particle size is determined as a median diameter (D₅₀) using a laser diffraction scattering method.

Component (B) may be one subjected to a surface treatment from the viewpoint of improving affinity with Component (A) and improving mechanical strength. Examples of the compound used for the surface treatment include: vinylsilane compounds such as vinyltriethoxysilane and vinyltrichlorosilane; epoxysilane compounds such as γ-glycidoxypropyltrimethoxysilane, γ-glycidoxypropyltriethoxysilane, and β-(3,4-epoxycyclohexyl)ethyltrimethoxysilane; aminosilane compounds such as γ-(2-aminoethyl)aminopropylmethyldimethoxysilane, γ-(2-aminoethyl)aminopropyltrimethoxysilane, and γ-aminopropyltrimethoxysilane; methacryloxysilane compounds such as γ-methacryloxypropylmethyldimethoxysilane, γ-methacryloxypropyltrimethoxysilane, γ-methacryloxypropylmethyldiethoxysilane, and γ-methacryloxypropyltriethoxysilane; and long-chain fatty acids or long-chain aliphatic alcohols such as stearic acid, oleic acid, montanic acid, and stearyl alcohol.

Component (B) may be used in two or more types that differ in specifications such as purity, the presence or absence and content of components other than magnesium carbonate, average particle size, and the presence or absence of surface treatment.

The content of Component (B) contained in the resin composition of the present invention is 50 to 150 parts by weight based on 100 parts by weight of Component (A). When the content of Component (B) is less than 50 parts by weight, the heat dissipation characteristics of the resulting molded article of the thermoplastic polyester resin composition decrease. The content of Component (B) based on 100 parts by weight of Component (A) is preferably 60 parts by weight or more, and more preferably 70 parts by weight or more. On the other hand, when the content of Component (B) exceeds 150 parts by weight, the heat cycle property decreases. The content of Component (B) based on 100 parts by weight of Component (A) is preferably 140 parts by weight or less, and more preferably 130 parts by weight or less.

The thermoplastic polyester resin composition of the present invention contains Component (C). By containing Component (C), breakage of glass fibers is suppressed even in a high filler composition of Component (B); therefore, a thermoplastic polyester resin composition having an excellent heat cycle property can be obtained. In addition, since the presence of Component (C), which is difficult to break, contributes to the formation of a heat conduction path in the molded article, high heat dissipation characteristics are manifested.

Component (C) is a glass fiber in which the magnesium atom content, as determined using a scanning electron microscope (SEM) equipped with energy dispersive X-ray spectroscopy (EDX), is 6 to 15% by mass. The method for measuring magnesium atoms (Mg) using a scanning electron microscope (SEM) equipped with energy dispersive X-ray spectroscopy (EDX) (hereinafter sometimes referred to as "Measurement Method B") is as described later. When the magnesium atom content determined by Measurement Method B is less than 6% by mass, the strength of the glass fiber decreases, and the heat cycle property of the resulting thermoplastic polyester resin composition decreases. The magnesium atom content in Component (C) determined by Measurement Method B is preferably 7% by mass or more from the viewpoint of the heat cycle property. On the other hand, when the magnesium atom content determined by Measurement Method B exceeds 15% by mass, the productivity of glass fibers decreases, leading to an increase in cost, and the mechanical strength of the thermoplastic polyester resin composition decreases due to a decrease in quality. The magnesium atom content determined by Measurement Method B is preferably 13% by mass or less from the viewpoint of the mechanical strength of the glass fibers.

### <Measurement Method B>

The magnesium atom content in Component (C) is determined by the following method. That is, it can be determined using JSM-IT700HR manufactured by JEOL Ltd., which is a scanning electron microscope (SEM) equipped with energy dispersive X-ray spectroscopy (EDX). Specifically, glass fibers are placed on an observation sample stage attached to a conductive carbon tape, and platinum-palladium is deposited by a sputtering method to obtain a sample for an electron microscope. This sample for an electron microscope is observed by SEM, and the magnification of the observation field is adjusted so that 3 or more and 5 or less glass fibers exist in the observation field. Three glass fibers existing in the observation field are selected, and elemental analysis is performed by energy dispersive X-ray spectroscopy for each at an accelerating voltage condition of 15 kV to detect atoms (oxygen, sodium, magnesium, aluminum, silicon, calcium) contained in the glass fibers. The magnesium atom content is calculated by taking the total mass of the detected atoms as 100% by mass. However, atoms other than the atoms used for calculation (oxygen, sodium, magnesium, aluminum, silicon, calcium) shall not be included in the total mass of atoms. The magnesium atom content is determined for each of the selected three glass fibers, and the arithmetic mean is taken as the magnesium atom content in Component (C). Note that the meaning of "atoms" is not influenced by its existing state, such as a state of existing in combination with other atoms or a state of existing as ions.

Component (C) may be a chopped strand type or roving type glass fiber in a state before compounding, and the surface thereof is preferably treated with a silane coupling agent such as an aminosilane compound or an epoxysilane compound and/or a sizing agent containing one or more types such as urethane, an acrylic acid copolymer such as an acrylic acid/styrene copolymer, a maleic anhydride copolymer such as a methyl acrylate/methyl methacrylate/maleic anhydride copolymer, vinyl acetate, or an epoxy compound such as bisphenol A diglycidyl ether or a novolac-type epoxy compound.

It is further preferable that Component (C) be a glass fiber treated with a sizing agent containing an epoxy compound or the like because it has excellent reactivity with Component (A) and the resulting thermoplastic polyester resin composition has an excellent heat cycle property. The silane coupling agent and/or the sizing agent can be mixed with water and used as an emulsion liquid.

The fiber diameter (circular equivalent average diameter) of Component (C) is preferably in the range of 1 to 30 µm. From the viewpoint of the dispersibility of Component (C) in the thermoplastic polyester resin composition, the lower limit thereof is preferably 5 µm or more. Also, from the viewpoint of mechanical strength, the upper limit thereof is preferably 15 µm or less. Further, the shape of the fiber cross-section of Component (C) is usually circular, but it may be an ellipse with an arbitrary aspect ratio, a flat shape, or a cocoon shape, and can have an arbitrary cross-sectional shape.

The tensile modulus of Component (C) is preferably 75 to 100 GPa. The tensile modulus of Component (C) is more preferably 80 GPa or more, and further preferably 85 GPa or more, from the viewpoint of the heat cycle property. On the other hand, from the viewpoint of productivity, the tensile modulus of Component (C) is more preferably 97 GPa or less, and further preferably 95 GPa or less. The tensile modulus of glass fibers can be measured by the method described in Method A of JIS R1657:2003.

The content of Component (C) contained in the resin composition of the present invention is 5 to 100 parts by weight based on 100 parts by weight of Component (A). When the content of Component (C) is less than 5 parts by weight, the mechanical strength and heat resistance are insufficient, and the heat cycle property decreases. The content of Component (C) based on 100 parts by weight of Component (A) is preferably 10 parts by weight or more, more preferably 20 parts by weight or more, and further preferably 30 parts by weight or more. On the other hand, when the content of Component (C) based on 100 parts by weight of Component (A) exceeds 100 parts by weight, flowability decreases, moldability deteriorates, and the heat cycle property deteriorates. In addition, since the presence of a large amount of glass fibers inhibits the formation of a heat conduction path by Component (B), heat dissipation characteristics decrease. The content of Component (C) based on 100 parts by weight of Component (A) is preferably 90 parts by weight or less, more preferably 80 parts by weight or less, and further preferably 70 parts by weight or less.

The thermoplastic polyester resin composition of the present invention may contain other inorganic fillers in addition to Component (B) and Component (C) within a range that does not impair the object of the present invention. Examples thereof include fibrous, whisker-like, needle-like, granular, powdery, and layered inorganic fillers. Specific examples include glass fibers other than Component (C), PAN-based or pitch-based carbon fibers, and metal fibers such as stainless steel fibers, aluminum fibers, and brass fibers; organic fibers such as aromatic polyamide fibers and liquid crystal polyester fibers; gypsum fibers, ceramic fibers, asbestos fibers, zirconia fibers, alumina fibers, silica fibers, titanium oxide fibers, silicon carbide fibers, rock wool, potassium titanate whiskers, barium titanate whiskers, silicon nitride whiskers, calcium sulfate whiskers, acicular titanium oxide, glass beads, milled fibers, glass flakes, wollastonite, silica, kaolin, talc, calcium carbonate, zinc oxide, magnesium oxide, aluminum oxide, mixtures of magnesium oxide and aluminum oxide, finely divided silicic acid, aluminum silicate, silicon oxide, smectite clay minerals (montmorillonite, hectorite), vermiculite, mica, fluorine taeniolite, zirconium phosphate, titanium phosphate, and dolomite. The surfaces of the above inorganic fillers may be treated with a known coupling agent (e.g., a silane-based coupling agent, a titanate-based coupling agent, etc.) or other surface treatment agents. Two or more of the above inorganic fillers may be used in combination. The content of the other inorganic fillers is, for example, 10 parts by weight or less, when the total amount of the thermoplastic polyester resin composition is taken as 100 parts by weight.

The thermoplastic polyester resin composition of the present invention preferably further contains a hydroxyl group-containing compound (hereinafter, sometimes referred to as "Component (D)"). Note that the hydroxyl group contained in Component (D) is an alcoholic hydroxyl group or a phenolic hydroxyl group. By containing Component (D), thermal conductivity and heat cycle property can be further improved. In the present invention, Component (D) may be any compound containing a hydroxyl group, and specific examples thereof include an alkylene oxide compound, a sugar alcohol compound, and a hydrogenated petroleum resin. It is considered that, by containing Component (D), the frictional resistance between the surface of Component (B) and the surface of Component (C) is reduced, thereby promoting the formation of a heat conduction path to improve thermal conductivity, and furthermore, the heat cycle property is improved by suppressing the breakage of glass fibers.

The hydroxyl group value of Component (D) is preferably 10 mg-KOH/g or more, more preferably 20 mg-KOH/g or more, and further preferably 30 mg-KOH/g or more, from the viewpoint of further increasing thermal conductivity. On the other hand, the upper limit of the hydroxyl group value of Component (D) is preferably 1,800 mg-KOH/g or less, more preferably 200 mg-KOH/g or less, and further preferably 100 mg-KOH/g or less, from the viewpoint of further increasing the heat cycle property. The hydroxyl group value as used herein is a value measured by a neutralization titration method (JIS K0070).

Examples of the alkylene oxide compound include compounds containing any of a methylene oxide unit, an ethylene oxide unit, a trimethylene oxide unit, a propylene oxide unit, and a tetramethylene oxide unit, and may be a condensate with an aliphatic alcohol, glycerin, pentaerythritol, sorbitan, bisphenol A, an alkylamine, or the like.

Examples of the sugar alcohol compound include compounds obtained by reducing a keto group of a monosaccharide, a disaccharide, or the like and converting it into a hydroxyl group, and specific examples thereof include xylitol, mannitol, sorbitol, galactose, maltitol, lactitol, and isomalt.

Examples of the hydrogenated petroleum resin include products obtained by hydrogenating a polymer of hydrocarbon compounds produced as byproducts during the thermal cracking of naphtha. For example, mention may be made of a hydrogenated product of a modified petroleum resin obtained by modifying a petroleum resin, which is obtained by polymerizing a C9 fraction and/or a C5 fraction, with an organic acid such as maleic anhydride, maleic acid, fumaric acid, (meth)acrylic acid, or phenol, or a derivative thereof.

Examples of the hydrogenated petroleum resin include "Arkon" P-125, P-115, P-100, and P-90, and "Plafit" E610H and E620H manufactured by Arakawa Chemical Industries, Ltd.; "I-MARV" P-100, P-125, P-140, S-100, and S-110 manufactured by Idemitsu Kosan Co., Ltd.; and "T-REZ" HA125, HA105, HA103, HA085, HB125, and HB103 manufactured by ENEOS Corporation.

The content of Component (D) contained in the resin composition of the present invention is preferably 0.3 parts by weight or more, more preferably 0.5 parts by weight or more, and particularly preferably 0.8 parts by weight or more based on 100 parts by weight of Component (A), from the viewpoint of improving thermal conductivity. On the other hand, the content of Component (D) based on 100 parts by weight of Component (A) is preferably 15 parts by weight or less, more preferably 13 parts by weight or less, and particularly preferably 11 parts by weight or less, from the viewpoint of improving the heat cycle property.

The thermoplastic polyester resin composition of the present invention may contain a thermoplastic resin other than Component (A) within a range that does not impair the object of the present invention. Examples of the thermoplastic resin other than Component (A) include vinyl-based resins, styrene-based resins, polyolefin resins, polyamide resins, polyacetal resins, polyurethane resins, aromatic or aliphatic polyketone resins, polyether ether ketone resins, polyimide resins, thermoplastic starch resins, polyurethane resins, aromatic polycarbonate resins, polyarylate resins, polyphenylene sulfide resins, polyphenylene ether resins, polysulfone resins, polyethersulfone resins, polyetherimide resins, cellulose acetate resins, and polyvinyl alcohol resins. When a thermoplastic resin other than Component (A) is contained, it is preferable that the proportion of Component (A) be the largest among the thermoplastic resin types in the thermoplastic polyester resin composition. For example, the amount thereof is 20 parts by weight or less when the total amount of the thermoplastic polyester resin composition is taken as 100 parts by weight.

The thermoplastic polyester resin composition of the present invention may contain a flame retardant within a range that does not impair the object of the present invention. Examples of the flame retardant include halogen-based flame retardants such as bromine-based flame retardants, phosphorus-based flame retardants, salts of triazine-based compounds with cyanuric acid or isocyanuric acid, silicone-based flame retardants, and inorganic flame retardants. Two or more of these may be contained. Among them, bromine-based flame retardants are preferable from the viewpoint of the flame retardant effect.

Specific examples of the bromine-based flame retardant include decabromodiphenyl oxide, octabromodiphenyl oxide, tetrabromodiphenyl oxide, tetrabromophthalic anhydride, hexabromocyclododecane, bis(2,4,6-tribromophenoxy)ethane, ethylenebis(tetrabromophthalimide), hexabromobenzene, 1,1-sulfonyl[3,5-dibromo-4-(2,3-dibromopropoxy)]benzene, polydibromophenylene oxide, tetrabromobisphenol S, tris(2,3-dibromopropyl-1)isocyanurate, tribromophenol, tribromophenyl allyl ether, tribromoneopentyl alcohol, brominated polystyrene, brominated polyethylene, tetrabromobisphenol A, tetrabromobisphenol A derivative, tetrabromobisphenol A-epoxy polymer, tetrabromobisphenol A-carbonate oligomer, tetrabromobisphenol A-carbonate polymer, tetrabromobisphenol A-bis(2-hydroxydiethyl ether), tetrabromobisphenol A-bis(2,3-dibromopropyl ether), tetrabromobisphenol A-bis(allyl ether), tetrabromocyclooctane, ethylenebis(pentabromodiphenyl), tris(tribromoneopentyl) phosphate, pentabromobenzyl polyacrylate, octabromotrimethylphenylindane, dibromoneopentyl glycol, dibromocresyl glycidyl ether; and N,N'-ethylenebis(tetrabromophthalimide). Among these, brominated acrylate-based flame retardants typified by pentabromobenzyl polyacrylate are preferable from the viewpoints of flame retardancy and mechanical strength.

The content of the bromine-based flame retardant that can be contained in the thermoplastic polyester resin composition of the present invention is preferably 1 to 50 parts by weight based on 100 parts by weight of Component (A). From the viewpoint of flame retardancy, it is more preferably 10 parts by weight or more, and from the viewpoint of mechanical strength, it is more preferably 30 parts by weight or less.

The thermoplastic polyester resin composition of the present invention can further contain an antimony compound. Containing an antimony compound is preferable because it can enhance the effect of suppressing thermal decomposition of the bromine-based flame retardant during combustion.

Specific examples of the antimony compound include antimony trioxide, sodium antimonate, and antimony pentoxide. Among them, antimony trioxide is particularly preferable from the viewpoint of the flame retardant effect.

The content of the antimony compound that can be contained in the thermoplastic polyester resin composition of the present invention is preferably 1 to 30 parts by weight based on 100 parts by weight of Component (A) from the viewpoint of mechanical properties. From the viewpoint of flame retardancy, it is more preferably 3 parts by weight or more, and from the viewpoint of mechanical strength, it is more preferably 20 parts by weight or less.

The thermoplastic polyester resin composition of the present invention can further contain a release agent. By containing a release agent, mold release characteristics from a mold during melt processing can be improved. Examples of the release agent include higher fatty acid ester-based waxes such as montanic acid and stearic acid, polyolefin-based waxes, and ethylene bis-stearamide-based waxes.

The content of the release agent that can be contained in the thermoplastic polyester resin composition of the present invention is preferably 0.01 to 1.00 parts by weight based on 100 parts by weight of Component (A). From the viewpoint of mold release characteristics, the content of the release agent is more preferably 0.03 parts by weight or more based on 100 parts by weight of Component (A), and from the viewpoint of heat resistance, it is more preferably 0.60 parts by weight or less.

The thermoplastic polyester resin composition of the present invention can further contain carbon black, titanium oxide, and pigments or dyes of various colors. By containing such pigments or dyes, it is possible to perform color matching to various colors and to improve weather resistance (light resistance) and conductivity. Pigments and dyes can be used in combination of two or more types depending on the desired color and other properties.

The carbon black, titanium oxide, and pigments or dyes of various colors may be treated with aluminum oxide, silicon oxide, zinc oxide, zirconium oxide, a polyol, a silane coupling agent, or the like. Those melt-blended with various thermoplastic resins to form a masterbatch, or those simply blended with various thermoplastic resins may also be used.

The content of the pigment or dye that can be contained in the thermoplastic polyester resin composition of the present invention is preferably 0.01 to 3.00 parts by weight based on 100 parts by weight of Component (A). From the viewpoint of preventing uneven coloring, the content of the pigment or dye is more preferably 0.03 parts by weight or more based on 100 parts by weight of Component (A), and from the viewpoint of mechanical strength, it is more preferably 1.00 parts by weight or less.

The thermoplastic polyester resin composition of the present invention may contain one or more types of arbitrary additives such as an antioxidant, a heat stabilizer, an ultraviolet absorber, a light stabilizer, a nucleating agent, a plasticizer, a flame retardant aid, and an antistatic agent, within a range that does not impair the object of the present invention.

The thermoplastic polyester resin composition of the present invention can be obtained by melt kneading Component (A), Component (B), and Component (C), and other components as necessary.

Specific examples of the melt kneading method include a method in which Components (A) to (C) and other additives as necessary are pre-mixed and supplied to an extruder or the like to be sufficiently melt-kneaded, or a method in which each component is supplied in a predetermined amount to an extruder or the like using a metering feeder such as a weight feeder and sufficiently melt-kneaded.

Examples of the pre-mixing include a method of dry blending and a method of mixing using a mechanical mixing device such as a tumbler, a ribbon mixer, and a Henschel mixer. Further, Component (C) and other inorganic fillers may be added by installing a side feeder between the breech-loading part and the vent of a multi-screw extruder such as a twin screw extruder. In the case of a liquid additive, a method of installing a liquid addition nozzle between the breech-loading part and the vent of a multi-screw extruder such as a twin screw extruder and adding it using a plunger pump, or a method of supplying it from the breech-loading part or the like with a metering pump, may be used.

The thermoplastic polyester resin composition of the present invention is preferably molded after being pelletized. As a pelletizing method, for example, a method in which the composition is discharged in a strand shape using a single screw extruder, a twin screw extruder, a triple screw extruder, a conical extruder, or a kneader-type mixer equipped with a "Unimelt" or "Dulmadge" type screw, and then cut with a strand cutter can be mentioned.

By melt-molding the thermoplastic polyester resin composition of the present invention, films, fibers, and molded articles of various other shapes can be obtained. Examples of the melt-molding method include injection molding, extrusion molding, and blow molding, and injection molding is particularly preferably used.

As the injection molding method, gas assisted molding, two-color molding, sandwich molding, in-mold molding, insert molding, and injection press molding are known in addition to the usual injection molding method, and any of these molding methods can be applied.

The molded article of the present invention can be used as molded articles for mechanical parts, electrical parts, electronic parts, and automobile parts. Furthermore, the molded article of the present invention is particularly useful for a heat dissipation material by taking advantage of its excellent heat dissipation characteristics. The heat dissipation material of the present invention is molded as a member for dissipating heat from electronic parts such as ICs, capacitors, relays, coils, terminals, and batteries that generate heat when a current flows. Specifically, it can be suitably applied to parts with high heat generation such as motor insulators, coil bobbins, bus bars, and junction boxes. The shape of the heat dissipation material can be appropriately selected from the viewpoint of heat dissipation efficiency, and a typical example is one in which a plurality of pillars or fins are formed on a plate-like member. Applying the resin composition of the present invention as a heat dissipation material can contribute to higher output and longer life. Furthermore, by utilizing the insulating properties of the thermoplastic polyester resin composition of the present invention, the heat dissipation material of the present invention can be provided in direct contact with an electronic part.

Specific examples of mechanical parts, electrical parts, electronic parts, and automobile parts include breakers, electromagnetic switches, focus cases, flyback transformers, molded articles for fixing units of copiers and printers, housings for household appliances and OA equipment, variable capacitor case parts, various terminal boards, transformers, printed wiring boards, housings, terminal blocks, insulators, coil bobbins, connectors, relays, disk drive chassis, switch parts, outlet parts, motor parts, sockets, plugs, capacitors, various cases, resistors, electrical and electronic parts into which metal terminals or lead wires are incorporated, computer-related parts, audio parts such as acoustic parts, lighting parts, telegraph equipment-related parts, telephone equipment-related parts, air conditioner parts, household appliance parts such as VTRs and televisions, copier parts, facsimile parts, optical equipment parts, automobile ignition device parts, automobile connectors, insulating members such as bus bars and junction boxes, and various automobile electrical equipment parts.

### EXAMPLES

Next, the effects of the thermoplastic polyester resin composition of the present invention will be specifically described with reference to Examples. Raw materials used in the Examples and Comparative Examples are shown below. Here, "%" all represents mass%, and "parts" all represents "parts by weight".
(A) Thermoplastic polyester resin
   <A-1> Polybutylene terephthalate resin: Polybutylene terephthalate manufactured by Toray Industries, Inc., melting point 225°C, carboxylic acid group amount 22 eq/t, and intrinsic viscosity 0.85 dL/g was used.
(B) Magnesium carbonate
   <B-1> Magnesium carbonate: Synthetic magnesite "Magthermo" MS-PS manufactured by Konoshima Chemical Co., Ltd., iron atom content 0.18 mass%, and average particle size 14 µm was used.
   <B-2> Magnesium carbonate: Natural magnesite manufactured by Sobueclay Co., Ltd., iron atom content 0.88 mass%, and average particle size 20 µm was used.
(C) Glass fiber
   <C-1> Glass fiber: Glass fiber having a magnesium atom content of 11 mass%, a tensile modulus of 90 GPa, and a cross-sectional diameter of 9 µm was used.
   <C-2> Glass fiber: Glass fiber having a magnesium atom content of 7 mass%, a tensile modulus of 82 GPa, and a cross-sectional diameter of 9 µm was used.
   <C'-3> Glass fiber: Glass fiber having a magnesium atom content of 1 mass%, a tensile modulus of 70 GPa, and a cross-sectional diameter of 9 µm was used.
(D) Hydroxyl group-containing compound
   <D-1> Alkylene oxide compound: Polyoxyethylene pentaerythritol, PNT-60U manufactured by Nippon Nyukazai Co., Ltd., hydroxyl group value 35 mg-KOH/g was used.
   <D-2> Sugar alcohol compound: Mannitol, mannitol manufactured by B Food Science Co., Ltd., hydroxyl group value 1,500 mg-KOH/g was used.
   <D-3> Hydrogenated petroleum resin: "Plafit" E610H manufactured by Arakawa Chemical Industries, Ltd., hydroxyl group value 50 mg-KOH/g was used.
(E) Flame retardant
   <E-1> Pentabromobenzyl polyacrylate: FR-1025 manufactured by ICL JAPAN CO., LTD. was used.
   <E-2> Antimony trioxide: FIRECUT AT-3 manufactured by SUZUHIRO CHEMICAL CO., LTD. was used.

### [Method for measuring each characteristic]

In the Examples and Comparative Examples, the characteristics were evaluated by the following measurement methods.

### (1) Thermal conductivity (heat dissipation characteristics)

A pellet-shaped resin composition as a sample was used to obtain a square plate of 80 mm length x 80 mm width x 3 mm thickness using an NEX1000 injection molding machine manufactured by NISSEI PLASTIC INDUSTRIAL CO., LTD. under the conditions of a molding temperature of 260°C, a mold temperature of 80°C, a total of 10 seconds for injection time and holding pressure time, and a cooling time of 10 seconds. The center part of this molded article was cut to obtain a heat dissipation test piece with a thickness of 2 mm, and the thermal conductivity was measured using a heat flow meter method thermal conductivity tester (GH-1S manufactured by Rigaku Corp.). The higher this value is, the better the thermal conductivity is.

### (2) Heat cycle property

A pellet-shaped resin composition as a sample was injection-molded using an NEX1000 injection molding machine manufactured by NISSEI PLASTIC INDUSTRIAL CO., LTD. under the conditions of a molding temperature of 260°C and a mold temperature of 80°C, with a total of 10 seconds for injection time and holding pressure time and a cooling time of 10 seconds, so as to cover a metal core of 47 mm x 47 mm x 27 mm with a resin thickness of 1.5 mm, and five molded articles in which the metal core was covered with the resin were produced. The molded articles were subjected to a heat cycle test using a thermal shock tester (TSA-70L manufactured by ESPEC Corp.) under the condition that one cycle consisted of treatment at -30°C for 1 hour and treatment at 120°C for 1 hour, and the number of cycles at which cracks occurred in all five molded articles was evaluated. It was determined that the larger the number of cycles, the better the heat cycle property.

### (3) Laser marking ability

On the surface of the square plate of 80 mm length x 80 mm width x 3 mm thickness obtained in (1), characters ("ABCDEFG") with a character width of 0.1 mm and a character thickness of 0.01 mm were printed by changing the laser output using an MD-V9900A YVO4 laser device manufactured by Keyence Corp. at a wavelength of 1064 nm, a frequency of 30 Hz, and a scanning speed of 700 mm/sec. The printed surface was scanned with a scanner GT-S600 manufactured by Seiko Epson Corp., and recognition was performed using character recognition software "Yonde!! Koko personal" manufactured by A.I. SOFT, Inc. Printing was performed on five samples, and the laser marking ability was evaluated by determining the average value of the minimum laser output at which all the printed characters were correctly recognized. It was evaluated that the smaller the laser output required for marking recognition, the higher the laser marking ability.

### [Examples 1 to 17, Comparative Examples 1 to 5]

Using a co-rotating twin screw extruder with a vent (TEX-30α manufactured by Japan Steel Works, Ltd.) having a screw diameter of 30 mm and L/D of 35, (A) thermoplastic polyester resin, (B) magnesium carbonate, (D) hydroxyl group-containing compound, and (E) flame retardant were mixed in the compositions shown in Tables 1 to 3 and then added from the breech-loading part of the twin screw extruder. Further, (C) glass fiber was added by installing a side feeder between the breech-loading part and the vent. Melt mixing was performed under the extrusion conditions of a kneading temperature of 260°C and a screw rotation of 200 rpm, and the mixture was discharged in a strand shape, passed through a cooling bath, and pelletized by a strand cutter. The obtained pellets were dried with a hot air dryer at a temperature of 110°C for 6 hours and then evaluated by the above-mentioned methods. The results are shown in Tables 1 to 3.

**Table 1**

| | Symbol | Unit | Examples | | | | | | | | |
|---|---|---|---|---|---|---|---|---|---|---|---|
| | | | 1 | 2 | 3 | 4 | 5 | 6 | 7 | 8 | 9 |
| (A) Thermoplastic polyester resin | A-1 | parts by weight | 100 | 100 | 100 | 100 | 100 | 100 | 100 | 100 | 100 |
| (B) Magnesium carbonate | B-1 | parts by weight | 100 | 147 | 55 | 100 | 100 | 100 | - | 100 | - |
| (B) Magnesium carbonate | B-2 | parts by weight | - | - | - | - | - | - | 100 | - | 100 |
| (C) Glass fiber | C-1 | parts by weight | 22 | 22 | 22 | 89 | 12 | 22 | 22 | - | - |
| (C) Glass fiber | C-2 | parts by weight | - | - | - | - | - | - | - | 22 | 22 |
| (C) Glass fiber | C'-3 | parts by weight | - | - | - | - | - | - | - | - | - |
| (D) Hydroxyl group-containing compound | D-1 | parts by weight | - | - | - | - | - | - | - | - | - |
| (D) Hydroxyl group-containing compound | D-2 | parts by weight | - | - | - | - | - | - | - | - | - |
| (D) Hydroxyl group-containing compound | D-3 | parts by weight | - | - | - | - | - | - | - | - | - |
| (E) Flame retardant | E-1 | parts by weight | - | - | - | - | - | 13 | - | - | - |
| (E) Flame retardant | E-2 | parts by weight | - | - | - | - | - | 5 | - | - | - |
| (1) Thermal conductivity | | W/m·K | 1.10 | 1.12 | 0.74 | 0.87 | 1.02 | 1.01 | 1.12 | 1.07 | 1.09 |
| (2) Heat cycle property | | cycle | 75 | 60 | 65 | 65 | 50 | 60 | 75 | 70 | 70 |
| (3) Laser marking ability (laser output) | | W | 65 | 75 | 55 | 75 | 75 | 65 | 40 | 65 | 40 |

**Table 2**

| | Symbol | Unit | Examples | | | | | | | |
|---|---|---|---|---|---|---|---|---|---|---|
| | | | 10 | 11 | 12 | 13 | 14 | 15 | 16 | 17 |
| (A) Thermoplastic polyester resin | A-1 | parts by weight | 100 | 100 | 100 | 100 | 100 | 100 | 100 | 100 |
| (B) Magnesium carbonate | B-1 | parts by weight | 100 | 100 | 100 | 100 | 100 | - | 100 | 100 |
| (B) Magnesium carbonate | B-2 | parts by weight | - | - | - | - | - | 100 | | - |
| (C) Glass fiber | C-1 | parts by weight | 22 | 22 | 22 | 22 | 22 | 22 | 22 | 22 |
| (C) Glass fiber | C-2 | parts by weight | - | - | - | - | - | - | - | - |
| (C) Glass fiber | C'-3 | parts by weight | - | - | - | - | - | - | - | - |
| (D) Hydroxyl group-containing compound | D-1 | parts by weight | 0.5 | 1 | - | - | - | - | - | - |
| (D) Hydroxyl group-containing compound | D-2 | parts by weight | - | - | 1 | - | - | - | - | - |
| (D) Hydroxyl group-containing compound | D-3 | parts by weight | - | - | - | 1 | 5 | 5 | 10 | 15 |
| (E) Flame retardant | E-1 | parts by weight | - | - | - | - | - | - | - | - |
| (E) Flame retardant | E-2 | parts by weight | - | - | - | - | - | - | - | - |
| (1) Thermal conductivity | | W/m·K | 1.12 | 1.13 | 1.13 | 1.14 | 1.18 | 1.20 | 1.19 | 1.12 |
| (2) Heat cycle property | | cycle | 80 | 80 | 75 | 85 | 85 | 90 | 90 | 80 |
| (3) Laser marking ability (laser output) | | W | 60 | 60 | 60 | 55 | 55 | 35 | 55 | 60 |

**Table 3**

| | Symbol | Unit | Comparative Examples | | | | |
|---|---|---|---|---|---|---|---|
| | | | 1 | 2 | 3 | 4 | 5 |
| (A) Thermoplastic polyester resin | A-1 | parts by weight | 100 | 100 | 100 | 100 | 100 |
| (B) Magnesium carbonate | B-1 | parts by weight | 175 | 45 | 100 | 100 | 100 |
| (B) Magnesium carbonate | B-2 | parts by weight | - | - | - | - | - |
| (C) Glass fiber | C-1 | parts by weight | 22 | 22 | 106 | 3 | - |
| (C) Glass fiber | C-2 | parts by weight | - | - | - | - | - |
| (C) Glass fiber | C'-3 | parts by weight | - | - | - | - | 22 |
| (D) Hydroxyl group-containing compound | D-1 | parts by weight | - | - | - | - | - |
| (D) Hydroxyl group-containing compound | D-2 | parts by weight | - | - | - | - | - |
| (D) Hydroxyl group-containing compound | D-3 | parts by weight | - | - | - | - | - |
| (E) Flame retardant | E-1 | parts by weight | - | - | - | - | - |
| (E) Flame retardant | E-2 | parts by weight | - | - | - | - | - |
| (1) Thermal conductivity | | W/m·K | 1.04 | 0.55 | 0.86 | 0.58 | 0.82 |
| (2) Heat cycle property | | cycle | 25 | 30 | 35 | 20 | 35 |
| (3) Laser marking ability (laser output) | | W | 125 | 65 | 80 | 60 | 85 |

From the comparison between the Examples and the Comparative Examples, it can be seen that a material excellent in heat dissipation characteristics and heat cycle property can be obtained by including Component (A), Component (B), and Component (C) and setting their contents within specific ranges.

## Claims

1. A thermoplastic polyester resin composition comprising a thermoplastic polyester resin (hereinafter referred to as "Component (A)"), magnesium carbonate (hereinafter referred to as "Component (B)"), and glass fiber (hereinafter referred to as "Component (C)") having a magnesium atom content of 6 to 15% by mass as determined using a scanning electron microscope (SEM) equipped with an energy dispersive X-ray spectroscopy (EDX), wherein:
the content of Component (B) is 50 to 150 parts by weight relative to 100 parts by weight of Component (A); and
the content of Component (C) is 5 to 100 parts by weight relative to 100 parts by weight of Component (A).

2. The thermoplastic polyester resin composition according to claim 1, further comprising a hydroxyl group-containing compound (hereinafter referred to as "Component (D)"), wherein the content of Component (D) is 0.3 to 15 parts by weight relative to 100 parts by weight of Component (A).

3. The thermoplastic polyester resin composition according to claim 1 or 2, wherein Component (C) has a tensile modulus of 75 to 100 GPa.

4. The thermoplastic polyester resin composition according to claim 1 or 2, wherein Component (B) contains iron atoms (Fe) in an iron atom content of 0.20% by mass or more and 1.50% by mass or less as determined using a scanning electron microscope (SEM) equipped with an energy dispersive X-ray spectroscopy (EDX).

5. A molded article obtained by injection molding the thermoplastic polyester resin composition according to claim 1 or 2.

6. A heat dissipation material comprising the thermoplastic polyester resin composition according to claim 1 or 2.
